# FASCICULE DE BREVET EUROPEEN

(11) **EP 1 010 909 B1**
(45) Date de publication et mention de la délivrance du brevet: **29.06.2005**
(21) Numéro de dépôt: 99403017.9
(22) Date de dépôt: 03.12.1999
(51) Int. Cl.: F16C 33/41, F16C 33/38

(54) **Cage pour roulement à billes**
Käfig für Kugellager
Cage for ball bearings

(30) Priorité: 18.12.1998 FR 9815991
(43) Date de publication de la demande: 21.06.2000
(73) Titulaire: SNR ROULEMENTS, F-74010 Annecy Cedex (FR)
(72) Inventeur: Chevalier, Laurent, 74960 Meythet (FR)
(74) Mandataire: Srour, Elie

(56) Documents cités:
- EP-A- 0 644 343
- DE-A- 3 341 970
- GB-A- 2 049 070
- US-A- 3 554 621
- US-A- 3 743 369
- US-A- 3 788 714
- US-A- 4 169 636
- US-A- 4 732 496

## Description

L'invention concerne une cage pour roulement à billes comportant un corps annulaire muni de logements en forme de calotte hémisphérique ouverts sur une face du corps annulaire, l'autre face du corps annulaire comportant une paroi formant un déflecteur destiné à protéger le roulement contre la pollution du milieu ambiant et à limiter les fuites de graisses avec les caractéristiques du préambule de la revendication 1.

L'invention concerne plus particulièrement une cage pouvant indifféremment être utilisée seule ou en combinaison avec une seconde cage identique pour former une nouvelle cage en deux parties aux caractéristiques de maintien et de protection améliorées.

La publication FR 2 134 913 décrit des cages pour roulement à billes intégrant un joint d'étanchéité empêchant la pénétration de la pollution à l'intérieur du roulement. Toutefois, les cages décrites dans ce document présentent des configurations différentes en fonction de la parité du nombre de billes ou procurent un maintien des billes peu satisfaisant. Par ailleurs, les mêmes cages ne peuvent pas être utilisées seules ou en association avec une cage identique, ce qui entraîne, pour répondre aux différents besoins des roulements, un nombre de configurations important qui est coûteux et difficile à gérer.

La publication FR 2 562 615 décrit une cage en plastique souple permettant l'intégration d'un déflecteur ou d'un joint. Toutefois, une telle cage est constituée de plusieurs parties non identiques, ce qui entraîne des coûts de fabrication et de gestion importants.

Le but de la présente invention est donc de proposer une cage intégrant des moyens de protection du roulement et possédant une bonne tenue sur les billes, pour diminuer les risques d'éjection de la cage, et qui puisse être utilisée seule ou associée avec une seconde cage identique pour s'adapter à moindre coût aux différentes contraintes de fonctionnement du roulement.

Dans le document le plus proche, i.e. le document GB 2 049 070, un mode de réalisation divulgue l'utilisation de deux cages identiques montées en vis-à-vis. Ces cages comprennent des griffes de rétention des billes. Toutefois, ces cages sont décalés angulairement pour que les griffes respectives de cages n'entrent pas en contact. Chaque cage ne retient ainsi que la moitié des billes du roulement.

L'invention concerne une cage pour roulement à billes comportant un corps annulaire muni de logements avec les caractéristiques de la revendication 1.

Cette caractéristique permet d'utiliser la cage selon l'invention en association avec une cage identique montée de l'autre côté du roulement pour former une cage en deux parties, dont les capacités de guidage et de protection sont fortement augmentées, chacune des billes du roulement étant entourée et maintenue simultanément par les deux parties de la cage.

Selon une autre caractéristique de l'invention, à chaque griffe correspond une cavité disposée symétriquement par rapport au rayon du corps annulaire passant par le centre du logement, la forme des cavités étant ajustée à la forme des griffes.

Selon une autre caractéristique de l'invention, l'épaisseur radiale des griffes est sensiblement égale à la moitié de l'épaisseur radiale du corps annulaire, les griffes étant disposées alternativement en bordure radiale externe et en bordure radiale interne de corps annulaire.

Selon une autre caractéristique de l'invention, le déflecteur comporte une lèvre d'étanchéité, réalisée par exemple par surmoulage, assurant l'étanchéité du roulement en venant au contact des bagues intérieure et extérieure du roulement.

Selon une autre caractéristique de l'invention, la cage est utilisée en association avec un dispositif d'étanchéité, de type connu en soi, assurant la protection du roulement du côté opposé au déflecteur intégré à la cage.

L'invention concerne également une cage en deux parties pour roulement à billes, caractérisée en ce qu'elle est constituée par l'association de deux cages identiques répondant aux caractéristiques précédemment décrites, les cages étant montées en vis-à-vis de chaque côté du roulement.

Selon une autre caractéristique de l'invention, les cages sont solidarisées entre elles par collage ou tout autre moyen connu par l'homme de l'art.

D'autres caractéristiques et avantages apparaîtront à la lecture de la description d'un exemple de dispositif selon l'invention, en référence aux dessins annexés dans lesquels :
- la figure 1 est une vue en coupe partielle d'un roulement muni d'une cage en deux parties formées par l'association de deux cages identiques réalisées selon l'invention,
- la figure 2 est une vue en perspective de la cage en deux parties de la figure 1,
- la figure 3 est une vue en perspective d'une des cages de la figure 1,
- la figure 4 est une vue en coupe partielle d'un roulement équipé de la cage représentée à la figure 3 en association avec un dispositif d'étanchéité disposé sur la face du roulement opposée à celle comportant le déflecteur intégré à la cage.

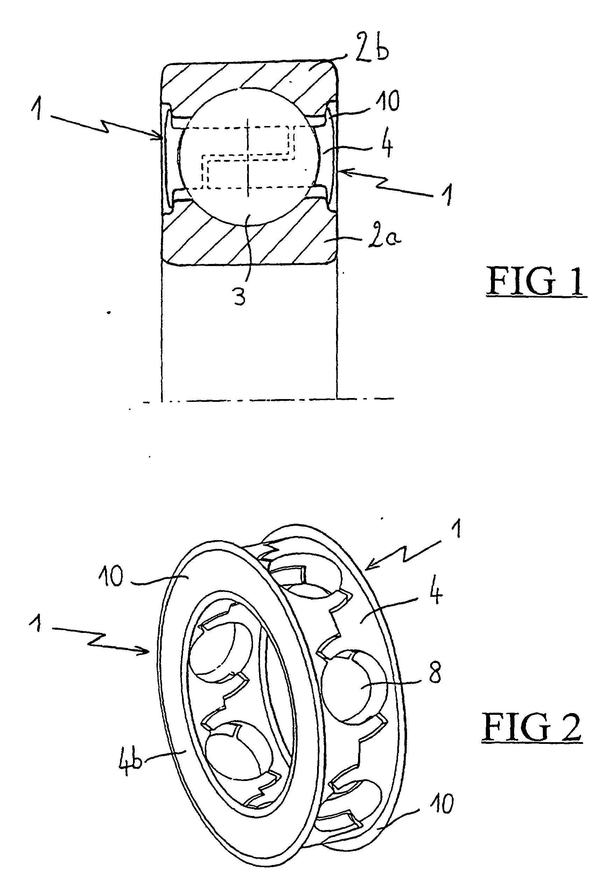

La figure 1 représente un roulement comportant une bague intérieure 2a, une bague extérieure 2b et des billes 3 guidées entre les bagues intérieure 2a et extérieure 2b dans une cage réalisée en deux parties, par l'association de deux cages 1 identiques.

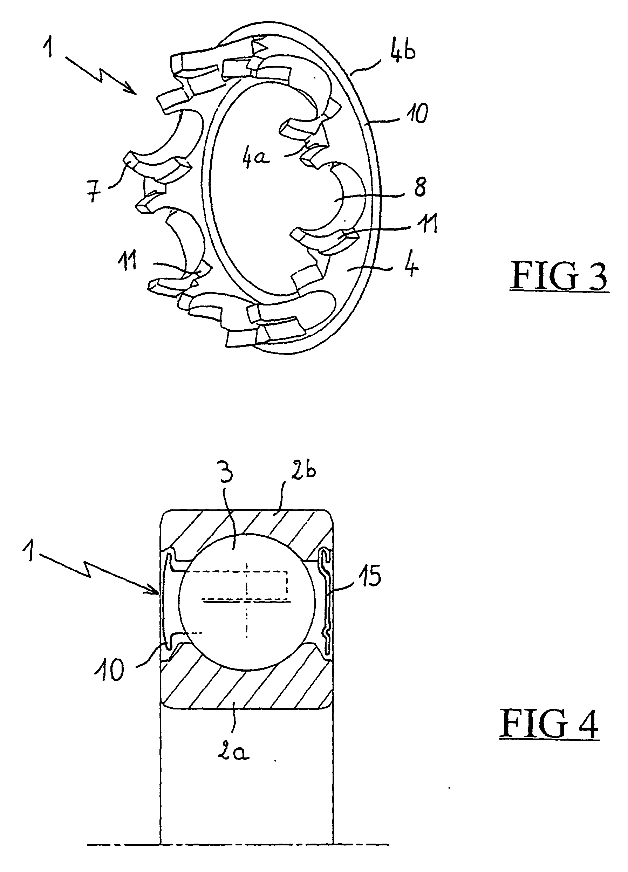

Comme on peut le voir plus précisément sur la figure 3, chaque cage 1 présente un corps annulaire 4 comportant, pour chaque bille 3 du roulement, un logement 8 en forme de calotte hémisphérique débouchant sur une face axiale 4a du corps annulaire 4, l'autre face 4b du corps annulaire 4 comportant un déflecteur 10, venu de moulage avec la cage 1, et s'étendant sur une longueur adaptée pour venir à proximité de la bague intérieure 2a et de la bague extérieure 2b.

Chaque bord du logement 8 est prolongé par une griffe 7 de rétention de la bille 3 possédant une surface sphérique venant au contact de la bille 3 et coopérant avec le logement 8 pour guider la bille 3 sur environ les deux tiers de son pourtour. Les griffes 7 sont disposées alternativement en bordure du rayon extérieur et en bordure du rayon intérieur du corps annulaire 4 et possèdent une épaisseur radiale égale à environ la moitié de l'épaisseur radiale du corps annulaire 4. A chaque griffe 7, correspond une cavité 11, disposée symétriquement par rapport au rayon du corps annulaire 4 passant par le centre du logement 8, et possédant une forme sensiblement complémentaire de la forme de la griffe 7 pour permettre l'assemblage des deux cages 1 en vis-à-vis.

Le montage des deux cages 1 s'effectue très simplement en assemblant, dans un premier temps, la première cage 1 du roulement sur l'ensemble des billes 3 puis en amenant la seconde cage 1 de l'autre côté du roulement et en engageant cette dernière sur les billes 3, maintenues en position par la première cage 1, jusqu'à la pénétration des griffes 7 d'une cage 1 à travers les cavités 11 de l'autre cage 1. Les deux cages 1 peuvent ensuite avantageusement être collées l'une sur l'autre.

Une telle cage en deux parties présente l'avantage d'offrir un excellent guidage des billes 3, par l'association des logements 8 des deux cages 1, la sphéricité des logements 8 et des griffes 7 réalisés sur une même cage 1 étant optimale. La cage en deux parties assure également la protection du roulement contre la pollution du milieu ambiant grâce au déflecteur 10 de chaque cage 1 qui peut avantageusement être recouvert, par exemple par surmoulage, d'une lèvre d'étanchéité venant au contact des bagues intérieure 2a et extérieure 2b.

Les cages 1 étant liées à l'ensemble des billes 3 par l'intermédiaire des griffes 7, chaque cage 1 possède une très forte tenue sur les billes 3, limitant ainsi le risque d'éjection des cages 1 lors du fonctionnement du roulement. Par ailleurs, en cas d'éjection d'une des cages 1, l'autre cage 1 reste attachée aux billes 3 et assure le guidage de l'ensemble des billes 3 ce qui permet au roulement de continuer à fonctionner.

Dans une variante d'utilisation de la cage 1 selon l'invention et lorsque les exigences sur le guidage des billes 3 du roulement ainsi que les exigences de protection contre la pollution sont moins importantes, les billes 3 du roulement peuvent être guidées par une seule cage 1, ce qui permet de réduire de moitié le coût de la cage de guidage du roulement sans frais d'étude supplémentaire.

Comme on peut le voir sur la figure 4, lorsque les conditions de fonctionnement du roulement nécessitent une forte protection contre la pollution du milieu ambiant, la cage 1 peut avantageusement être utilisée en combinaison avec un dispositif d'étanchéité 15, de type connu en soi.

La cage selon l'invention permet par son utilisation seule, en combinaison avec un dispositif d'étanchéité, ou en association avec une seconde cage identique, de s'adapter à faible coût aux différentes contraintes de fonctionnement auxquelles est soumis le roulement.

Enfin, la cage selon l'invention possède une géométrie qui peut être reconduite quelque soit la parité du nombre de billes du roulement, ce qui limite les frais d'étude lors de l'utilisation de la cage sur différents diamètres de roulement.

## Revendications

1. Cage (1) pour roulement à billes (3) comportant un corps annulaire (4) muni de logements (8) en forme de calotte hémisphérique ouverts sur une face (4a) du corps annulaire (4) et destinés à recevoir les billes (3), l'autre face (4b) du corps annulaire (4) comportant une paroi (10) formant un déflecteur, le nombre de logements (8) étant égal au nombre de billes (3) du roulement, et lesdits logements (8) se prolongeant par au moins une griffe (7) de rétention des billes (3) et présentant des cavités (11) permettant l'utilisation de ladite cage (1) en association avec une seconde cage (1) identique montée en vis-à-vis, chaque extrémité des calottes hémisphériques formant lesdits logements (8) comportant au moins une griffe (7), **caractérisée en ce que** lesdites griffes (7) d'un même logement (8) étant décalées radialement l'une de l'autre par rapport à l'axe de la cage (1), lesdits logements (8) comportant, pour chaque griffe (7), une cavité (11) disposée à la même hauteur radiale que ladite griffe (7) à l'autre extrémité du logement (8).

2. Cage (1) pour roulement à billes selon la revendication 1, **caractérisée en ce qu'**à chaque griffe (7) correspond une cavité (11) disposée symétriquement par rapport au rayon du corps annulaire (4) passant par le centre du logement (8), la forme de ladite cavité (11) étant ajustée à la forme de ladite griffe (7).

3. Cage (1) pour roulement à billes selon la revendication 2, **caractérisée en ce que** l'épaisseur radiale des griffes (7) est sensiblement égale à la moitié de l'épaisseur radiale du corps (4), lesdites griffes (7) étant disposées alternativement en bordure radiale externe et en bordure radiale interne de corps annulaire (4).

4. Cage (1) pour roulement à billes selon l'une quelconque des revendications 1 à 3, **caractérisée en ce que** ledit déflecteur (10) comporte une lèvre d'étanchéité, par exemple par surmoulage, assurant l'étanchéité du roulement en venant au contact des bagues intérieure (2a) et extérieure (2b) du roulement.

5. Cage (1) pour roulement à billes selon l'une quelconque des revendications 1 à 3, **caractérisée en ce que** ladite cage est utilisée en association avec un dispositif d'étanchéité (15), de type connu en soi, assurant la protection du roulement du côté opposé au déflecteur (10).

6. Cage en deux parties pour roulement à billes, **caractérisée en ce qu'**elle est constituée par l'association de deux cages (1) identiques selon l'une quelconque des revendications 1 à 4, lesdites cages (1) étant montées en vis-à-vis de chaque côté du roulement.

7. Cage en deux partie selon la revendication 6, **caractérisée en ce que** les deux cages (1) sont solidarisées entre elles par collage.

8. Roulement à billes, **caractérisé en ce qu'**il comporte une cage selon l'une quelconque des revendications 1 à 7.

## Patentansprüche

1. Käfig (1) für ein Kugellager (3), welcher einen ringförmigen Körper (4) aufweist, der mit Aufnahmen (8) in Form einer halbkugelförmigen Kalotte versehen ist, die auf einer Seite (4a) des ringförmigen Körpers (4) offen sind, und welche dafür bestimmt sind, die Kugeln (3) aufzunehmen, wobei die andere Seite (4b) des ringförmigen Körpers (4) eine Wand (10) aufweist, die einen Ablenker bildet, wobei die Anzahl von Aufnahmen (8) gleich der Anzahl von Lagerkugeln (3) ist, und wobei die Aufnahmen (8) durch mindestens eine Halteklaue (7) der Kugeln (3) verlängert sind und Vertiefungen (11) aufweisen, welche die Verwendung des Käfigs (1) in Verbindung mit einem zweiten, identischen Käfig (1), der gegenüberliegend montiert ist, erlauben, wobei jedes Ende der halbkugelförmigen Kalotten, welche die Aufnahme (8) bilden, mindestens eine Klaue (7) aufweist, **dadurch gekennzeichnet, dass** die Klauen (7) einer gleichen Aufnahme (8) radial voneinander im Verhältnis zur Achse des Käfigs (1) versetzt sind, wobei die Aufnahmen (8) für jede Klaue (7) eine Vertiefung (11) aufweisen, welche auf der gleichen radialen Höhe wie die Klaue (7) am anderen Ende der Aufnahme (8) angeordnet ist.

2. Käfig (1) für ein Kugellager nach Anspruch 1, **dadurch gekennzeichnet, dass** jeder Klaue (7) eine Vertiefung (11) entspricht, welche symmetrisch im Verhältnis zum Radius des ringförmigen Körpers (4), welcher durch das Zentrum der Aufnahme (8) geht, angeordnet ist, wobei die Form der Vertiefung (11) auf die Form der Klaue (7) abgestimmt ist.

3. Käfig (1) für ein Kugellager nach Anspruch 2, **dadurch gekennzeichnet, dass** die radiale Dicke der Klauen (7) im Wesentlichen gleich der Hälfte der radialen Dicke des Körpers (4) ist, wobei die Klauen (7) abwechselnd am radialen äußeren Rand und am radialen inneren Rand des ringförmigen Körpers (4) angeordnet sind.

4. Käfig (1) für ein Kugellager nach einem der Anspräche 1 bis 3, **dadurch gekennzeichnet, dass** der Ablenker (10) eine Dichtigkeitslippe, z.B. durch Übergießen, aufweist, welche die Dichtigkeit des Lagers sicherstellt, unter einem In-Kontaktgelangen von inneren Ringen (2a) und äußeren Ringen (2b) des Lagers.

5. Käfig (1) für ein Kugellager nach einem der Ansprüche 1 bis 3, **dadurch gekennzeichnet, dass** der Käfig in Verbindung mit einer Dichtigkeitsvorrichtung (15) von einer an sich bekannten Art verwendet wird, welche den Schutz des Lagers auf der Seite sicherstellt, die dem Ablenker (10) gegenüberliegt.

6. Käfig in zwei Teilen für ein Kugellager, **dadurch gekennzeichnet, dass** er durch Verbindung von zwei identischen Käfigen (1) nach irgendeinem der Ansprüche 1 bis 4 gebildet ist, wobei die Käfige (1) gegenüberliegend von jeder Seite des Lagers montiert sind.

7. Käfig in zwei Teilen nach Anspruch 6, **dadurch gekennzeichnet, dass** die zwei Käfige (1) untereinander durch Klebung fest verbunden sind.

8. Kugellager, **dadurch gekennzeichnet, dass** es einen Käfig nach irgendeinem der Ansprüche 1 bis 7 aufweist.

## Claims

1. A cage (1) for a ball bearing (3) comprising an annular body (4) provided with open housings (8) in the form of hemispherical caps on a surface (4a) of the annular body (4) and adapted to receive the balls (3), the other surface (4b) of the annular body (4) comprising a wall (10) forming a deflector, the number of housings (8) being equal to the number of balls (3) of the bearing, and these housings (8) being prolonged by at least one claw (7) adapted to retain the balls (3) and having cavities (11) enabling this cage (1) to be used in association with a second identical cage (1) mounted to face one another, each end of the hemispherical caps forming the housings (8) comprising at least one claw (7), **characterised in that** the claws (7) of the same bearing (8) are offset radially from one another with respect to the axis of the cage (1), the housings (8) comprising, for each claw (7), a cavity (11) disposed at the same radial height as the claw (7) at the other end of the housing (8).

2. A cage (1) for a ball bearing as claimed in claim 1, **characterised in that**, for each claw (7), there is a corresponding cavity (11) disposed symmetrically with respect to the radius of the annular body (4) passing through the centre of the housing (8), the shape of this cavity (11) being adapted to the shape of the claw (7).

3. A cage (1) for a ball bearing as claimed in claim 2, **characterised in that** the radial thickness of the claws (7) is substantially equal to half the radial thickness of the annular body (4), the claws (7) being disposed alternately on the radial outer edge and the radial inner edge of the annular body (4).

4. A cage (1) for a ball bearing as claimed in any one of claims 1 to 3, **characterised in that** the deflector (10) comprises a sealing lip, formed for instance by duplicate moulding, ensuring the leak-tightness of the bearing and coming into contact with the inner and outer rings (2a, 2b) of the bearing.

5. A cage (1) for a ball bearing as claimed in any one of claims 1 to 3, **characterised in that** the cage is used in association with a sealing device (15), of a type known per se, ensuring the protection of the bearing on the side opposite the deflector (10).

6. A two-part cage for a ball bearing, **characterised in that** it is formed by the association of two identical cages (1) as claimed in any one of claims 1 to 4, these cages (1) being mounted to face one another on each side of the bearing.

7. A two-part cage as claimed in claim 6, **characterised in that** the two cages (1) are made rigid by adhesion.

8. A ball bearing, **characterised in that** it comprises a cage as claimed in any one of claims 1 to 7.
